# EUROPÄISCHE PATENTSCHRIFT

(11) **EP 0 553 614 B1**
(45) Veröffentlichungstag und Bekanntmachung des Hinweises auf die Patenterteilung: **16.07.1997**
(21) Anmeldenummer: 93100119.2
(22) Anmeldetag: 07.01.1993
(51) Int. Cl.: C09D 11/02

(54) **Verwendung einer Flüssigkeit, enthaltend IR-Farbstoffe, als Druckfarbe**
Use of infrared dyes containing liquid as a printing ink
Utilisation comme encre d'impression d'un liquide contenant un colorant infrarouge

(30) Priorität: 25.01.1992 DE 4202038
(43) Veröffentlichungstag der Anmeldung: 04.08.1993
(73) Patentinhaber: BASF Aktiengesellschaft, 67063 Ludwigshafen (DE)
(72) Erfinder: Albert, Bernhard, Dr., W-6701 Maxdorf (DE); Closs, Friedrich, Dr., D-68165 Mannheim (DE); Kipper, Juergen, Dr., W-7500 Karlsruhe (DE); Kurtz, Walter, Dr., W-6702 Bad Duerkheim (DE); Beck, Karin Heidrun, Dr., W-6700 Ludwigshafen (DE); Griebel, Rudolf, Dr., W-5200 Siegburg (DE)

(56) Entgegenhaltungen:
- EP-A- 0 134 518
- PATENT ABSTRACTS OF JAPAN vol. 015, no. 248 (C-0843)25. Juni 1991
- PATENT ABSTRACTS OF JAPAN vol. 015, no. 450 (C-0885)15. November 1991

## Beschreibung

Die vorliegende Erfindung betrifft die Verwendung einer Flüssigkeit, enthaltend einen oder mehrere Farbstoffe aus der Klasse der Phthalocyanine der Formel Ia 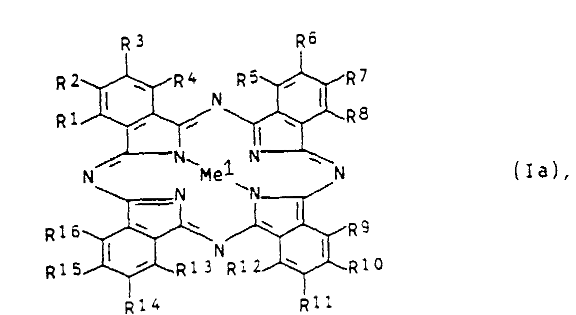 in der
Me¹ zweimal Wasserstoff, zweimal Lithium, Magnesium, Zink, Kupfer, Nickel, VO, TiO oder AlCl,
mindestens 4 der Reste R¹ bis R¹⁶ unabhängig voneinander jeweils einen Rest der Formel W-X¹, worin W für eine chemische Bindung, Schwefel, Imino, C₁-C₄-Alkylimino oder Phenylimino und X¹ für C₁-C₂₀-Alkyl, das gegebenenfalls durch 1 bis 4 Sauerstoffatome in Etherfunktion unterbrochen ist und durch Phenyl substituiert sein kann, oder gegebenenfalls substituiertes Phenyl stehen, und
gegebenenfalls die übrigen Reste R¹ bis R¹⁶ Wasserstoff, Halogen, Hydroxysulfonyl oder C₁-C₄-Dialkylsulfamoyl bedeuten,
der Phthalocyanine der Formel Ib 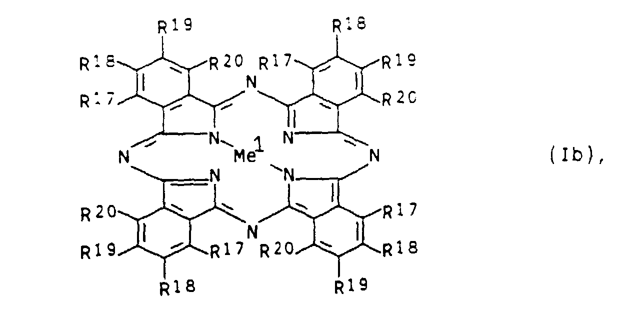
in der
R¹⁷ und R¹⁸ oder R¹⁸ und R¹⁹ oder R¹⁹ und R²⁰ zusammen jeweils einen Rest der Formel X²-C₂H₄-X³, worin einer der beiden Reste X² und X³ für Sauerstoff und der andere für Imino oder C₁-C₄-Alkylimino steht, und
R¹⁹ und R²⁰ oder R¹⁷ und R²⁰ oder R¹⁷ und R¹⁸ unabhängig voneinander jeweils Wasserstoff oder Halogen bedeuten und
Me¹ die obengenannte Bedeutung besitzt,
der Naphthalocyanine der Formel II 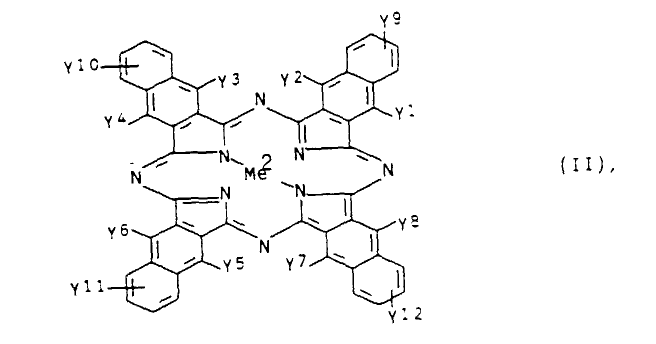 in der
Y¹, Y², Y³, Y⁴, Y⁵, Y⁶, Y⁷ und Y⁸ unabhängig voneinander jeweils Wasserstoff, Hydroxy oder C₁-C₂₀-Alkoxy, wobei die Alkylgruppen jeweils durch 1 bis 4 Sauerstoffatome in Etherfunktion unterbrochen sein können und gegebenenfalls durch Phenyl substituiert sind,
Y⁹, Y¹⁰ Y¹¹ und Y¹² unabhängig voneinander jeweils Wasserstoff oder C₁-C₂₀-Alkoxy, wobei die Alkylgruppen jeweils durch 1 bis 4 Sauerstoffatome in Etherfunktion unterbrochen sein können, Halogen, Hydroxylsulfonyl oder C₁-C₄-Dialkylsulfamoyl und
Me² zweimal Wasserstoff, zweimal Lithium, Magnesium, Zink, Kupfer, Nickel oder AlCl bedeuten, mit der Maßgabe, daß mindestens einer der Reste Y¹ bis Y⁸ von Wasserstoff verschieden ist,
der Nickel-Dithiolen-Komplexe der Formel III 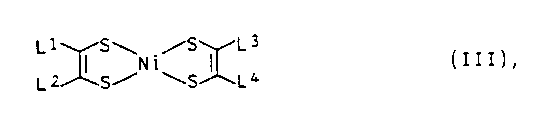 in der
L¹, L², L³ und L⁴ unabhängig voneinander jeweils C₁-C₂₀-Alkyl, das gegebenenfalls durch 1 bis 4 Sauerstoffatome in Etherfunktion unterbrochen ist, Phenyl, C₁-C₂₀-Alkylphenyl, C₁-C₂₀-Alkoxyphenyl, wobei die Alkylgruppen jeweils durch 1 bis 4 Sauerstoffatome in Etherfunktion unterbrochen sein können, oder L¹ und L² und/oder L³ und L⁴ jeweils zusammen den Rest der Formel 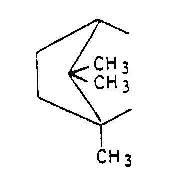 bedeuten,
der Aminiumverbindungen der Formel IV 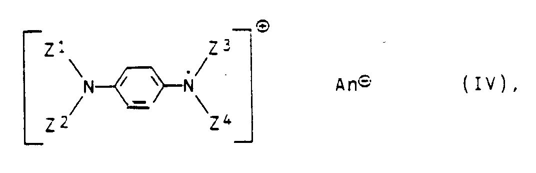 in der
Z¹, Z², Z³ und Z⁴ unabhängig voneinander jeweils C₁-C₂₀-Alkyl, das gegebenenfalls durch 1 bis 4 Sauerstoffatome in Etherfunktion unterbrochen ist, C₁-C₂₀-Alkanoyl oder einen Rest der Formel 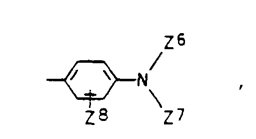
worin Z⁶ für Wasserstoff, C₁-C₂₀-Alkyl, das gegebenenfalls durch 1 bis 4 Sauerstoffatome in Etherfunktion unterbrochen ist, oder C₁-C₂₀-Alkanoyl, Z⁷ für Wasserstoff oder C₁-C₂₀-Alkyl, das gegebenenfalls durch 1 bis 4 Sauerstoffatome in Etherfunktion unterbrochen ist, und Z⁸ für Wasserstoff, C₁-C₂₀-Alkyl, das gegebenenfalls durch 1 bis 4 Sauerstoffatome in Etherfunktion unterbrochen ist, oder Halogen stehen, und
An^{⊖} das Äquivalent eines Anions bedeuten,
der Methinfarbstoffe der Formel V 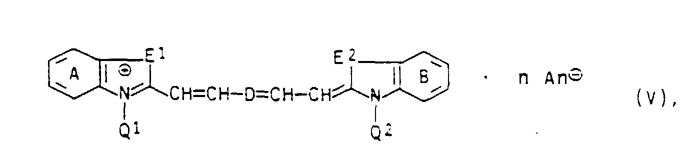 in der die Ringe A und B unabhängig voneinander jeweils gegebenenfalls benzoanelliert sind und substituiert sein können,
E¹ und E² unabhängig voneinander jeweils Sauerstoff, Schwefel, Imino oder einen Rest der Formel

-C(CH₃)₂- oder -CH=CH- ,

D einen Rest der Formel

-CE³= , -CH=CE³-CH= ,

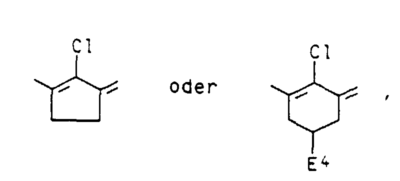

worin E³ für Wasserstoff, C₁-C₆-Alkyl, Chlor oder Brom und E⁴ für Wasserstoff oder C₁-C₆-Alkyl stehen,
Q¹ und Q² unabhängig voneinander jeweils Phenyl, C₅-C₇-Cycloalkyl, C₁-C₁₂-Alkyl das durch 1 bis 3 Sauerstoffatome in Etherfunktion unterbrochen sein kann und gegebenenfalls durch Hydroxy, Chlor, Brom, Carboxyl, C₁-C₄-Alkoxycarbonyl, Acryloyloxy, Methacryloyloxy, Hydroxysulfonyl, C₁-C₇-Alkanoylamino, C₁-C₆-Alkylcarbamoyl, C₁-C₆-Alkylcarbamoyloxy oder einen Rest der Formel G^{⊕}(K)₃, worin G für Stickstoff oder Phosphor und K für Phenyl, C₅-C₇-Cycloalkyl oder C₁-C₁₂-Alkyl stehen, substituiert ist,
An^{⊖} das Äquivalent eines Anions und
n 1, 2 oder 3 bedeuten, oder
der Azulenquadratsäurefarbstoffe der Formel VI 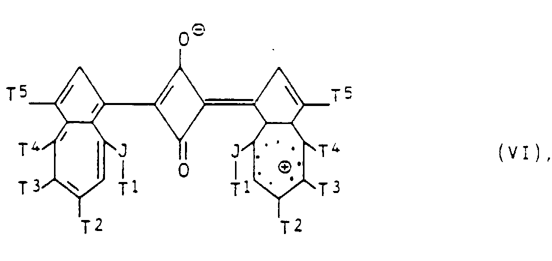 in der
J C₁-C₁₂-Alkylen,
T¹ Wasserstoff, Halogen, Amino, Hydroxy, C₁-C₁₂-Alkoxy, Phenyl, substituiertes Phenyl, Carboxyl, C₁-C₁₂-Alkoxycarbonyl, Cyano oder einen Rest der Formel -NT⁷-CO-T⁶, -CO-NT⁶T⁷ oder O-CO-NT⁶T⁷, worin T⁶ und T⁷ unabhängig voneinander jeweils für Wasserstoff, C₁-C₁₂-Alkyl, C₅-C₇-Cycloalkyl, Phenyl, 2,2,6,6-Tetramethylpiperidin-4-yl oder Cyclohexylaminocarbonyl stehen, und
T², T³, T⁴ und T⁵ unabhängig voneinander jeweils Wasserstoff oder C₁-C₁₂-Alkyl, das gegebenenfalls durch Halogen, Amino, C₁-C₁₂-Alkoxy, Phenyl, substituiertes Phenyl, Carboxyl, C₁-C₁₂-Alkoxycarbonyl oder Cyano substituiert ist, bedeuten,
mit der Maßgabe, daß wenn T⁵ Wasserstoff bedeutet, an einem oder beiden Azulenringen die Ringpositionen der Substituenten J-T¹ und T⁴ innerhalb eines Azulenrings auch gegeneinander vertauscht sein können,
die ihr Absorptionsmaximum im Bereich von 700 bis 1200 nm aufweisen, Lösungsmittel und Bindemittel, als Druckfarbe.

Mit Hilfe moderner Geräte der Kommunikationstechnik gewinnt das sichere und schnelle Erfassen von Informationen eine immer stärkere Bedeutung. Dabei kommt eine besondere Rolle dem automatischen, digitalen Einlesen von Information zu, die gedruckt, digital oder analog vorliegt. Als Beispiel dienen gedruckte Barcodes, die mit geeigneten Lichtquellen und Detektoren abgetastet und gelesen werden können.

So werden handelsübliche Druckfarben dazu verwendet, um maschinenlesbare Barcodes zu drucken. Durch Zusatzstoffe, wie Ruß, spezielle Pigmente oder Metallpulver, ist es zudem möglich, gedruckte, sichtbare Barcodes auch mit Licht, das eine Wellenlänge oberhalb des sichtbaren Bereichs aufweist, auszulesen.

Beispielsweise werden in der DE-A-3 826 734 Farbmittel für das Ink-Jet-Verfahren beschrieben, die sowohl im sichtbaren als auch im infraroten Bereich ausgelesen werden können.

Außerdem sind aus der JP-A-251 578/1991 Metallkomplexe bekannt, mit denen sich Tinten auf Ölbasis herstellen lassen, die im nahen IR-Bereich absorbieren.

Allerdings zeigen praktisch alle Drucke, die mit solchen Farbmitteln erstellt wurden, eine starke Absorption im Sichtbaren.

Aus der DE-C-4 022 822 ist weiterhin die Anwendung von Siliciumnaphthalocyanin in Druckfarben bekannt.

Aus der EP-A-134 518, JP-A-79 683/1991 und JP-A-192 171/1991 sind spezielle Phthalocyanine und Naphthalocyanine bekannt, die für das Lesen mit Barcode-Lesegeräten in Frage kommen.

Aufgabe der vorliegenden Erfindung war es nun, geeignete Flüssigkeiten bereitzustellen, die vorteilhaft für die Herstellung von Drucken nach dem Tief-, Hoch- oder Flexodruckverfahren angewendet werden können. Die damit erzeugten Drucke sollten im nahen Infrarot eine ausreichend starke Absorption aufweisen, daß ein Auslesen mit geeigneten Barcode-Lesegeräten ermöglicht wird, dagegen im Sichtbaren keine oder nur eine geringe Absorption aufweisen.

Es wurde nun gefunden, daß sich die eingangs näher bezeichneten Flüssigkeiten vorteilhaft als Druckfarbe eignen.

Alle in den obengenannten Formeln auftretenden Alkyl-, Alkylen- oder Alkenylreste können sowohl geradkettig als auch verzweigt sein.

In Formel Ia, III oder IV sind geeignete C₁-C₂₀-Alkylreste, die gegebenenfalls durch 1 bis 4 Sauerstoffatome in Etherfunktion unterbrochen sind, z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecyl, Pentadecyl, Hexadecyl, Heptadecyl, Octadecyl, Nonadecyl, Eicosyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 3, 6, 9, 12-Tetraoxatridecyl oder 3,6,9,12-Tetraoxatetradecyl.

In Formel I ist geeignetes C₁-C₂₀-Alkyl, das durch Phenyl substituiert ist, z.B. Benzyl oder 1- oder 2-Phenylethyl.

In Formel II, III oder IV sind geeignete C₁-C₂₀-Alkoxyreste, die gegebenenfalls durch 1 bis 4 Sauerstoffatome in Etherfunktion unterbrochen sind, z.B. Methoxy, Ethoxy, Propoxy, Isopropoxy, Butoxy, Isobutoxy, Pentyloxy, Hexyloxy, Heptyloxy, Octyloxy, 2-Ethylhexyloxy, Isooctyloxy, Nonyloxy, isononyloxy, Decyloxy, Isodecyloxy, Undecyloxy, Dodecyloxy, Tridecyloxy, Isotridecyloxy, Tetradecyloxy, Pentadecyloxy, Hexadecyloxy, Heptadecyloxy, Octadecyloxy, Nonadecyloxy, Eicosyloxy, 2-Methoxyethoxy, 2-Ethoxyethoxy, 2-Propoxyethoxy, 2-Isopropoxyethoxy, 2-Butoxyethoxy, 2- oder 3-Methoxypropoxy, 2- oder 3-Ethoxypropoxy, 2- oder 3- Propoxypropoxy, 2- oder 3-Butoxypropoxy, 2- oder 4-Methoxybutoxy, 2- oder 4-Ethoxybutoxy, 2- oder 4-Propoxybutoxy, 2- oder 4-Butoxybutoxy, 3,6-Dioxaheptyloxy, 3,6-Dioxaoctyloxy, 4,8-Dioxanonyloxy, 3,7-Dioxaoctyloxy, 3,7-Dioxanonyloxy, 4,7-Dioxaoctyloxy, 4,7-Dioxanonyloxy, 4,8-Dioxadecyloxy, 3,6,8-Trioxadecyloxy, 3,6,9-Trioxaundecyloxy, 3,6,9,12-Tetraoxatridecyloxy oder 3,6,9,12-Tetraoxatetradecyloxy.

In Formel II ist geeignetes C₁-C₂₀-Alkoxy, das durch Phenyl substituiert ist, z.B. Benzyloxy oder 1- oder 2-Phenylethoxy.

In Formel Ia, III oder VI ist geeignetes substituiertes Phenyl z.B. durch C₁-C₆-Alkyl, C₁-C₆-Alkoxy, Hydroxy oder Halogen substituiertes Phenyl. In der Regel können dabei 1 bis 3 Substituenten auftreten.

Halogen in Formel Ib, II, IV oder VI ist z.B. Fluor, Chlor oder Brom.

Reste W in Formel Ia sowie X² oder X³ in Formel Ib sind z.B. Methylimino, Ethylimino, Propylimino, Isopropylimino oder Butylimino.

Reste R1 bis R16 in Formel Ia sowie Y⁹ bis Y¹² in Formel II sind z.B. Dimethylsulfamoyl, Diethylsulfamoyl, Dipropylsulfamoyl, Dibutylsulfamoyl oder N-Methyl-N-ethylsulfamoyl.

Z⁶ in Formel IV bedeutet z.B. Formyl, Acetyl, Propionyl, Butyryl, Isobutyryl, Pentanoyl, Hexanoyl, Heptanoyl, Octanoyl oder 2-Ethylhexanoyl.

Wenn die Ringe A und/oder B in Formel V substituiert sind, so können als Substituenten z.B. C₁-C₆-Alkyl, Phenyl-C₁-C₆-alkoxy, Phenoxy, Halogen, Hydroxy, Amino, C₁-C₆-Mono- oder Dialkylamino oder Cyano in Betracht kommen. Die Ringe sind dabei in der Regel 1 bis 3-fach substituiert.

Reste E³, E⁴, Q¹ und Q² in Formel V sind z.B. Methyl, Ethyl, Propyl, Isopropyl, Butyl, Isobutyl, sec-Butyl, Pentyl, Isopentyl, Neopentyl, tert-Pentyl oder Hexyl.

Reste Q¹ und Q² sind weiterhin z.B. Hexyl, 2-Methylpentyl, Heptyl, Octyl, 2-Ethylhexyl, Isooctyl, Nonyl, Isononyl, Decyl, Isodecyl, Undecyl, Dodecyl, Cyclopentyl, Cyclohexyl, 2-Methoxyethyl, 2-Ethoxyethyl, 2- oder 3-Methoxypropyl, 2- oder 3-Ethoxypropyl, 2-Hydroxyethyl, 2- oder 3-Hydroxypropyl, 2-Chlorethyl, 2-Bromethyl, 2- oder 3-Chlorpropyl, 2- oder 3-Brompropyl, 2-Carboxyethyl, 2- oder 3-Carboxypropyl, 2-Methoxycarbonylethyl, 2-Ethoxycarbonylethyl, 2- oder 3-Methoxycarbonylpropyl, 2- oder 3-Ethoxycarbonylpropyl, 2-Acryloyloxyethyl, 2- oder 3-Acryloyloxypropyl, 2-Methacryloyloxyethyl, 2- oder 3-Methacryloyloxypropyl, 2-Hydroxysulfonylethyl, 2- oder 3-Hydroxysulfonylpropyl, 2-Acetylaminoethyl, 2- oder 3-Acetylaminopropyl, 2-Methylcarbamoylethyl, 2-Ethylcarbamoylethyl, 2- oder 3-Methylcarbamoylpropyl, 2- oder 3-Ethylcarbamoylpropyl, 2-Methylcarbamoyloxyethyl, 2-Ethylcarbamoyloxyethyl, 2- oder 3-Methylcarbamoyloxypropyl, 2- oder 3-Ethylcarbamoyloxypropyl, 2-(Trimethylammonium)-ethyl, 2-(Triethylammonium)ethyl, 2- oder 3-(Trimethylammonium)-propyl, 2- oder 3-(Triethylammonium)propyl, 2-(Triphenylphosphonium)ethyl oder 2- oder 3-(Triphenylphosphonium)propyl.

An^{⊖} in Formel IV oder V leitet sich z.B. von Anionen organischer oder anorganischer Säuren ab. Besonders bevorzugt sind dabei z.B. Methansulfonat, 4-Methylbenzolsulfonat, Acetat, Trifluoroacetat, Heptafluorobutyrat, Chlorid, Bromid, Iodid, Perchlorat, Tetrafluoroborat, Nitrat, Hexafluorophosphat oder Tetraphenylborat.

Weiterhin können als anorganische Anionen auch die Anionen von Heteropolysäuren, z.B. des Phosphors oder des Siliciums, verwendet werden. Als Beispiele seien genannt: Molybdatophosphorsäure, Molybdatokieselsäure, Vanadatophosphorsäure, Vanadatokieselsäure, Wolframatophosphorsäure, Wolframatokieselsäure oder Mischsäuren dieser Art.

Reste J in Formel VI sind z.B. Methylen, Ethylen, 1,2- oder 1,3-Propylen, 1,2-, 1,3-, 2,3- oder 1,4-Butylen, Pentamethylen, Hexamethylen, Heptamethylen, Octamethylen, Nonamethylen, Decamethylen, Undecamethylen oder Dodecamethylen.

Reste T², T³, T⁴ und T⁵ in Formel VI sind beispielsweise Methyl, Ethyl, Propyl, Isopropyl, Butyl, Isobutyl, sec-Butyl, tert-Butyl, Pentyl, Isopentyl, Neopentyl, tert-Pentyl, 2-Methylbutyl, Hexyl, 2-Methylpentyl, Heptyl, Octyl, 2-Ethylhexyl, Isooctyl, Nonyl, Isononyl, Decyl, Undecyl, Dodecyl, Fluormethyl, Chlormethyl, Difluormethyl, Trifluormethyl, Trichlormethyl, 2-Fluorethyl, 2-Chlorethyl, 2-Bromethyl, 1,1,1-Trifluorethyl, Heptafluorpropyl, 4-Chlorbutyl, 5-Fluorpentyl, 6-Chlorhexyl, Cyanomethyl, 2-Cyanoethyl, 3-Cyanopropyl, 2-Cyanobutyl, 4-Cyanobutyl, 5-Cyanopentyl, 6-Cyanohexyl, 2-Aminoethyl, 2-Aminopropyl, 3-Aminopropyl, 2-Aminobutyl, 4-Aminobutyl, 5-Aminopentyl, 6-Aminohexyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 2-Methoxyethyl, 2-Ethoxyethyl, 2-Propoxyethyl, 2-Isopropoxyethyl, 2-Butoxyethyl, 2-Methoxypropyl, 2-Ethoxypropyl, 3-Ethoxypropyl, 4-Ethoxybutyl, 4-Isopropoxybutyl, 5-Ethoxypentyl, 6-Methoxyhexyl, Benzyl, 1-Phenylethyl, 2-Phenylethyl, 4-Chlorbenzyl, 4-Methoxybenzyl, 2-(4-Methylphenyl)ethyl, Carboxymethyl, 2-Carboxyethyl, 3-Carboxypropyl, 4-Carboxybutyl, 5-Carboxypentyl, 6-Carboxyhexyl, Methoxycarbonylmethyl, Ethoxycarbonylmethyl, 2-Methoxycarbonylethyl, 2-Ethoxycarbonylethyl, 3-Methoxycarbonylpropyl, 2-Ethoxycarbonylpropyl, 4-Methoxycarbonylbutyl, 4-Ethoxycarbonylbutyl, 5-Methoxycarbonylpentyl, 5-Ethoxycarbonylpentyl, 6-Methoxycarbonylhexyl oder 6-Ethoxycarbonylhexyl.

T¹ in Formel I ist z.B. Methoxycarbonyl, Ethoxycarbonyl, Propoxycarbonyl, Isopropoxycarbonyl, Butoxycarbonyl, Isobutoxycarbonyl, sec-Butoxycarbonyl, tert-Butoxycarbonyl, Pentyloxycarbonyl, Isopentyloxycarbonyl, Neopentyloxycarbonyl, tert-Pentyloxycarbonyl, Hexyloxycarbonyl, Heptyloxycarbonyl, Octyloxycarbonyl, Isooctyloxycarbonyl, Nonyloxycarbonyl, Isononyloxycarbonyl, Decyloxycarbonyl, Isodecyloxycarbonyl, Undecyloxycarbonyl, Dodecyloxycarbonyl, Methoxy, Ethoxy, Propoxy, Isopropoxy, Butoxy, Isobutoxy, Pentyloxy, Hexyloxy, Acetylamino, Carbamoyl, Mono- oder Dimethylcarbamoyl, Mono- oder Diethylcarbamoyl, Monocyclohexylcarbonyl, Phenylcarbamoyl, Dimethylcarbamoyloxy oder Diethylcarbamoyloxy.

Bevorzugt ist die Verwendung von Flüssigkeiten als Druckfarbe, die einen oder mehrere Farbstoffe aus der Klasse der Naphthalocyanine der Formel II oder Nickel-Dithiolen-Komplex der Formel III enthalten.

Hervorzuheben ist die Verwendung von Flüssigkeiten als Druckfarbe, die ein oder mehrere Naphthalocyanine der Formel IIa 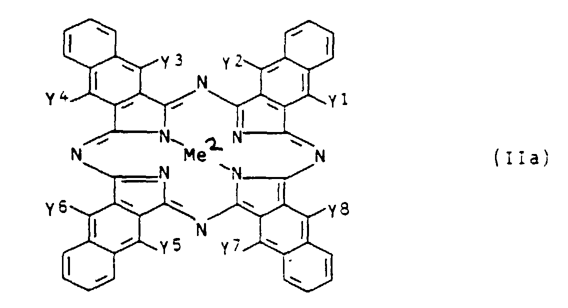 enthalten, in der
Y¹, Y², Y³, Y⁴, Y⁵, Y⁶, Y⁷ und Y⁸ unabhängig voneinander jeweils Wasserstoff, Hydroxy oder C₁-C₂₀-Alkoxy und
Me² zweimal Wasserstoff, zweimal Lithium, Magnesium, Zink, Kupfer, Nickel, oder AlCl bedeuten.

Besonders hervorzuheben ist die Verwendung von Flüssigkeiten als Druckfarbe, die ein oder mehrere Naphthalocyanine der Formel IIa enthalten, in der Y¹, Y², Y³, Y⁴, Y⁵, Y⁶, Y⁷ und Y⁸ unabhängig voneinander jeweils Hydroxy oder C₁-C₂₀-Alkoxy, insbesondere C₁-C₁₀-Alkoxy bedeuten. Die Alkoxyreste können dabei gleich oder verschieden sein.

Besonders hervorzuheben ist weiterhin die Verwendung von Flüssigkeiten als Druckfarben, die ein oder mehrere Naphthalocyanine der Formel IIa enthalten, in der Me² zweimal Wasserstoff bedeutet.

Hervorzuheben ist weiterhin die Verwendung von Flüssigkeiten als Druckfarbe, die einen oder mehrere Nickel-Dithiolen-Komplexe -Komplexe der Formel III enthalten, in der L¹, L², L³ und L⁴ unabhängig voneinander jeweils Phenyl, C₁-C₂₀-Alkylphenyl, C₁-C₂₀-Alkoxyphenyl oder durch Hydroxy und C₁-C₂₀-Alkyl substituiertes Phenyl oder L¹ und L² sowie L³ und L⁴ jeweils zusammen den Rest der Formel 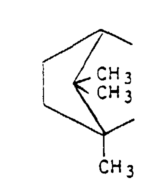 bedeuten.

Besonders hervorzuheben ist weiterhin die Verwendung von Flüssigkeiten als Druckfarbe, die einen oder mehrere Nickel-Dithiolen-Komplexe der Formel III enthalten, in der L¹ und L⁴ jeweils Phenyl und L² und L⁴ jeweils einen Rest der Formel 4-C₂H₅-C(CH₃)₂-C₆H₄ bedeuten.

Die Phthalocyanine der Formel Ia sind an sich bekannt und z.B. in DE-B-1 073 739 oder EP-A-155 780 beschrieben oder können nach an sich bekannten Methoden, wie sie bei der Herstellung von Phthalocyaninen oder Naphthalocyaninen zur Anwendung kommen und wie sie beispielsweise in F.H. Moser, A.L. Thomas "The Phthalocyanines", CRC Press, Boca Rota, Florida, 1983, oder J. Am. Chem. Soc. Band 106, Seiten 7404 bis 7410, 1984, beschrieben sind, erhalten werden.

Die Phthalocyanine der Formel Ib sind ebenfalls an sich bekannt und z.B. in EP-A-155 780 beschrieben oder können gemäß den Methoden des obengenannten Standes der Technik (Moser, J.Am. Chem.Soc.) erhalten werden.

Die Naphthalocyanine der Formel II sind ebenfalls an sich bekannt und beispielsweise in der GB-A-2 168 372 oder GB-A-2 200 650 beschrieben oder können gemäß den Methoden des obengenannten Standes der Technik (Moser, J.Am. Chem.Soc.) erhalten werden.

Die Nickel-Dithiolen-Komplexe der Formel III sind ebenfalls an sich bekannt und beispielsweise in der EP-A-192 215 beschrieben.

Die Aminiumverbindungen der Formel IV sind ebenfalls an sich bekannt und z.B. in US-A-3 484 467 beschrieben oder können gemäß den dort genannten Methoden erhalten werden.

Die Methinfarbstoffe der Formel V sind ebenfalls an sich bekannt und z.B. in der älteren Patentanmeldung EP-A-464 543 beschrieben oder können gemäß den dort genannten Methoden erhalten werden.

Die Azulenquadratsäurefarbstoffe der Formel VI sind ebenfalls an sich bekannt und z.B. in der EP-A-310 080 oder US-A-4 990 649 beschrieben oder können gemäß den dort genannten Methoden erhalten werden.

Geeignete Lösungsmittel, die für die erfindungsgemäß zu verwendenden Flüssigkeiten in Betracht kommen, sind z.B. Wasser, Alkohole, wie Methanol, Ethanol, Propanol, Isopropanol, Butanol, Isobutanol, sec-Butanol, Pentanol, Isopentanol, Neopentanol oder Hexanol, Glykole, wie 1,2-Ethylenglykol, 1,2- oder 1,3-Propylenglykol, 1,2-, 2,3- oder 1,4-Butylenglykol, Di- oder Triethylenglykol oder Di- oder Tripropylenglykol, Ether, wie Methyl-tert-butylether, 1,2-Ethylenglykolmono- oder -dimethylether, 1,2-Ethylenglykolmono- oder -diethylether, 3-Methoxypropanol, 3-Isopropoxypropanol, Tetrahydrofuran oder Dioxan, Ketone, wie Aceton, Methylethylketon oder Diacetonalkohol, Ester, wie Essigsäuremethylester, Essigsäureethylester, Essigsäurepropylester oder Essigsäurebutylester, aliphatische oder aromatische Kohlenwasserstoffe wie Pentan, Hexan, Heptan, Octan, Isooctan, Petrolether, Toluol, Xylol, Ethylbenzol, Tetralin, Dekalin, Dimethylnaphthalin, Testbenzin, Mineralöl oder Kerosin, trocknende Pflanzenöle oder kompatible Mischungen dieser Lösungsmittel.

Weitere geeignete Lösungsmittel sind z.B. in R.H. Leach (Ed.) "The Printing Ink Manual", 4th Ed., 1988, Van Nostrand Reinhold, London, aufgeführt.

Geeignete Bindemittel, die für die erfindungsgemäß zu verwendenden Flüssigkeiten in Betracht kommen, sind z.B. natürliche Harze, wie Kolophonium, Resinate, Schellack, Asphalte oder Gummi Arabicum, oder synthetische Harze, wie Phenolharze, phenolmodifiziertes Kolophonium, Alkydharze, Polystyrol, Polystyrol-Copolymere, Terpenharze, Siliconharze, Harnstoff-Formaldehyd-Harze, Melaminharze, Polyamidharze, Polyimidharze, Polyacrylate, Polymethacrylate, chlorierter Gummi, Vinylesterharze, Acrylharze, Epoxidharze, Polyisocyanatharze, Nitrocellulose, Kohlenwasserstoffharze oder Celluloseacetat.

Weitere geeignete Bindemittel sind z.B. in "The Printing Ink Manual" (s.o.) beschrieben.

Die erfindungsgemäß zu verwendenden Flüssigkeiten können weitere Zusätze, z.B. Weichmacher, Wachse, Siccative, Chelat-bildende Mittel, Antioxidantien, Stabilisatoren, Haftvermittler oder oberflächenaktive Substanzen, enthalten.

Die erfindungsgemäß zu verwendenden Flüssigkeiten enthalten in der Regel 0,001 bis 15 Gew.%, vorzugsweise 0,01 bis 5 Gew.%, jeweils bezogen auf das Gewicht der Flüssigkeit, an Farbstoff.

Die Farbstoffe liegen dabei in gelöster Form oder in fester Form (in feinverteiltem Zustand) vor.

Die erfindungsgemäß zu verwendenden Flüssigkeiten enthalten weiterhin in der Regel 10 bis 60 Gew.%, vorzugsweise 15 bis 40 Gew.%, jeweils bezogen auf das Gewicht der Flüssigkeit, an Bindemittel.

Hervorzuheben ist die Verwendungung einer Flüssigkeit als Druckfarbe, die Toluol oder Mineralöl als Lösungsmittel enthält.

Weiterhin hervorzuheben ist die Verwendung einer Flüssigkeit als Druckfarbe, die ein Bindemittel auf Basis von Polyacrylat oder Polymethacrylat enthält.

Die erfindungsgemäß zu verwendenden Flüssigkeiten werden zweckmäßig nach an sich bekannten Methoden, z.B. durch Mischen der einzelnen Partner, hergestellt. Sie weisen eine geringe Farbstoffkonzentration auf. Wie oben bereits ausgeführt, liegt in ihnen der Farbstoff in gelöster oder feinverteilter fester Form vor. Sie eignen sich insbesondere im Tiefdruck, Hochdruck oder im Flexodruck. Weiterhin eignen sie sich in vorteilhafter Weise für die Herstellung von Dokumenten und Wertschriften.

Die erfindungsgemäße anzuwendenden Flüssigkeiten können dabei vorteilhaft bei solchen Substraten Anwendung finden, die im IR-Bereich eine hohe Remission (≥ 70 %) aufweisen.

Bei der Anwendung von zusätzlichen Farbmitteln ist der Zeitpunkt des Aufdruckens der erfindungsgemäß zu verwendenden Flüssigkeit unerheblich. Die erfindungsgemäß zu verwendende Flüssigkeit kann z.B. zuerst aufgedruckt werden und anschließend mit herkömmlichen Druckfarben überdruckt werden. Es ist aber auch möglich, diese Reihenfolge umzukehren oder aber die erfindungsgemäß zu verwendende Flüssigkeit in Mischung mit herkömmlichen Druckfarben aufzudrucken. In allen Fällen können die Drucke (z.B. Barcodes) mit geeigneten Lichtquellen gelesen werden.

Besonders überraschend dabei ist, daß man, obwohl die erfindungsgemäß anzuwendenden Flüssigkeiten nur einen geringen Farbstoffanteil aufweisen, noch zu gut IR-lesbaren Drucken gelangt.

Die folgenden Beispiele sollen die Erfindung näher erläutern.

### Allgemeine Verfahrensvorschrift I

Es wird eine 10 gew.-%ige Lösung des Bindemittels in einem Lösungsmittel hergestellt.

10 ml dieser Lösung werden bei 20°C mit 10 mg Farbstoff versetzt und gerührt bis Lösung eintritt.

Die resultierende Lösung wird mit einer 36 µm Drahtrakel einerseits auf Illustriertenpapier und andererseits auf Polyesterfolie gerakelt und getrocknet.

Anschließend werden die Folienaufstriche in Transmission und die Papieraufstriche in Remission gemessen, wobei als Absorptionsmaximum das Minimum der Remission gilt.

Als Farbstoffe kamen die folgenden Produkte zur Anwendung.

### Farbstoff 1

Hexadecaphenylthio-kupferphthalocyanin

### Farbstoff 2

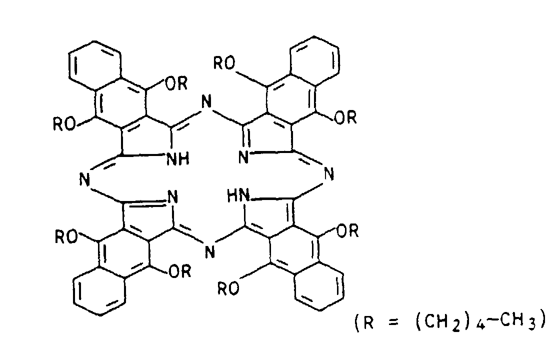

### Farbstoff 3

Tetradecaphenylthio-kupferphthalocyanin

### Farbstoff 4

Tetradecadodecylthio-kupferphthalocyanin

### Farbstoff 5

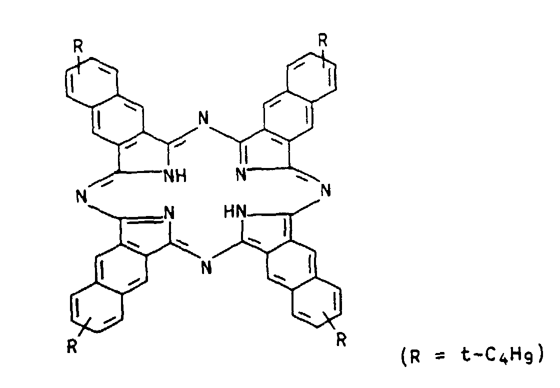

### Farbstoff 6

Hexadeca(4-tert-butylphenylthio)-kupferphthalocyanin

### Farbstoffe 7 bis 11

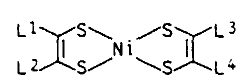

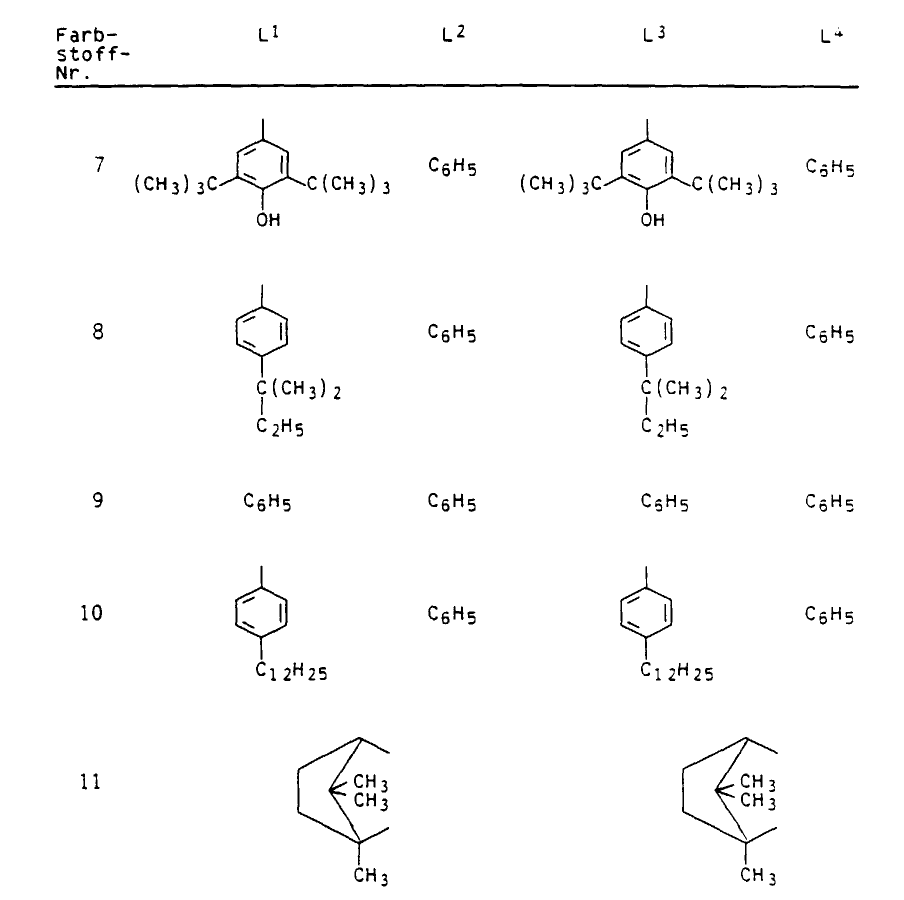

### Farbstoffe 12 bis 14

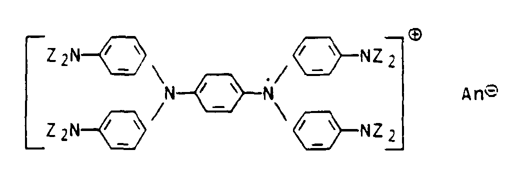

| Farbstoff Nr. | Z | An^{⊖} |
|---|---|---|
| 12 | C₄H₉ | NO₃^{⊖} |
| 13 | C₂H₅ | NO₃^{⊖} |
| 14 | C₄H₉ | BF₄^{⊖} |

### Farbstoffe 15 bis 19

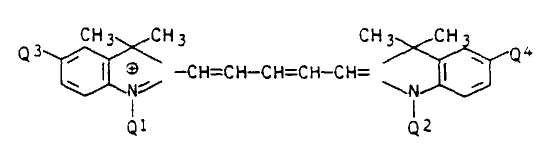

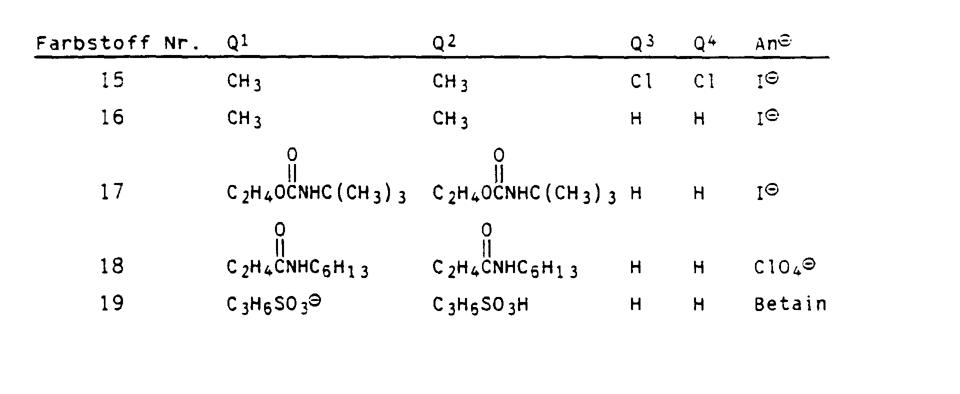

### Farbstoff Nr. 20

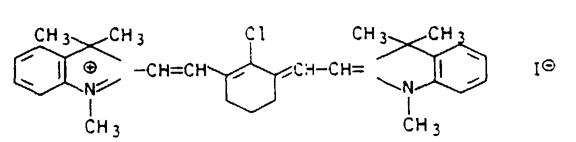

Als Bindemittel kamen die folgenden Produkte zur Anwendung.
B 1 = phenolmodifiziertes Kolophonium
B 2 = handelsübliches Kohlenwasserstoffharz
B 3 = Zink-Calcium-Salz von Kolophonium
B 4 = niedermolekulares Polymethylmethacrylat
B 5 = Styrol-Acrylnitril-Copolymer
B 6 = Polystyrol

Als Lösungsmittel wurde Toluol verwendet.

Es wurden die in der folgenden Tabelle 1 aufgeführten Ergebnisse erzielt:

**Tabelle 1**

| Bsp. Nr. | Farbstoff Nr. | Bindemittel | Absorptionsmaximum [nm] | |
|---|---|---|---|---|
| | | | Papier | Folie |
| 21 | 1 | B1 | 780 | 775 |
| 22 | 1 | B5 | 775 | 775 |
| 23 | 2 | B1 | 845 | 845 |
| 24 | 3 | B1 | 770 | 770 |
| 25 | 4 | B1 | 720 | 720 |
| 26 | 5 | B5 | 715 | 720 |
| 27 | 6 | B5 | 780 | 780 |
| 28 | 7 | B1 | 850 | |
| 29 | 8 | B4 | 865 | 875 |
| 30 | 8 | B5 | 860 | 890 |
| 31 | 8 | B2 | 880 | 885 |
| 32 | 9 | B1 | 910 | |
| 33 | 10 | B2 | 865 | |
| 34 | 10 | B1 | 870 | |
| 35 | 10 | B3 | 870 | |
| 36 | 10 | B6 | 815 | |
| 37 | 10 | B4 | 865 | |
| 38 | 10 | B5 | 860 | |
| 39 | 11 | B5 | 785 | 795 |
| 40 | 11 | B6 | 780 | |
| 41 | 12 | B5 | 950 | 1000 |
| 42 | 13 | B5 | 950 | 1000 |
| 43 | 14 | B5 | 950 | 990 |
| 44 | 15 | B1 | 770 | |
| 45 | 15 | B5 | 765 | 790 |
| 46 | 15 | B2 | 765 | |
| 47 | 15 | B3 | 760 | |
| 48 | 16 | B5 | 750 | 765 |
| 49 | 17 | B3 | 760 | |
| 50 | 17 | B5 | 760 | 755 |
| 51 | 17 | B2 | 755 | |
| 52 | 17 | B1 | 760 | |
| 53 | 18 | B5 | 755 | 760 |
| 54 | 19 | B5 | | 770 |
| 55 | 20 | B5 | 785 | 770 |

### Allgemeine Verfahrensvorschrift II

1 g Farbstoff werden mit 45 g des Bindemittels B1 und 55 g Toluol zu einer Druckfarbe formuliert.

Es werden mit einer Tiefdruckwalze (mit einer Napftiefe von 16, 24 und 36 µm und 70-er Raster, d.h. 70 Punkte pro cm²) Drucke erzeugt und deren Remission gemessen. Als Substrat werden Naturpapier (N) und Illustriertenpapier (I) verwendet. Zum Vergleich ist die Remission bei 580 nm (sichtbarer Bereich) und 870 nm (IR-Bereich) angegeben.

**Tabelle 2**

| Bsp. Nr. | Farbstoff Nr. | Napftiefe [µm] | Papier | Remission 550 nm | [%] bei 870 nm |
|---|---|---|---|---|---|
| 56 | 8 | 16 | I | 73,5 | 68,0 |
| 57 | 8 | 16 | N | 69,6 | 66,6 |
| 58 | 8 | 24 | I | 68,7 | 45,0 |
| 59 | 8 | 24 | N | 65,6 | 43,5 |
| 60 | 8 | 36 | I | 59,3 | 19,7 |
| 61 | 8 | 36 | N | 57,6 | 22,7 |

Nicht bedrucktes Papier zeigte folgende Remissionswerte:

| | Remission 550 nm | [%] bei 870 nm |
|---|---|---|
| I | 76,9 | 90,8 |
| N | 71,8 | 89,0 |

## Patentansprüche

1. Verwendung einer Flüssigkeit, enthaltend einen oder mehrere Farbstoffe aus der Klasse der Phthalocyanine der Formel Ia 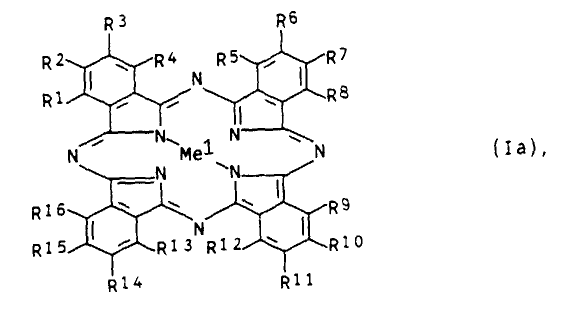 in der
Me zweimal Wasserstoff, zweimal Lithium, Magnesium, Zink, Kupfer, Nickel, VO, TiO oder AlCl,
mindestens 4 der Reste R¹ bis R¹⁶ unabhängig voneinander jeweils einen Rest der Formel W-X¹, worin W für eine chemische Bindung, Schwefel, Imino, C₁-C₄-Alkylimino oder Phenylimino und X¹ für C₁-C₂₀-Alkyl, das gegebenenfalls durch 1 bis 4 Sauerstoffatome in Etherfunktion unterbrochen ist und durch Phenyl substituiert sein kann, oder gegebenenfalls substituiertes Phenyl stehen, und
gegebenenfalls die übrigen Reste R¹ bis R¹⁶ Wasserstoff, Halogen, Hydroxysulfonyl oder C₁-C₄-Dialkylsulfamoyl bedeuten,
der Phthalocyanine der Formel Ib 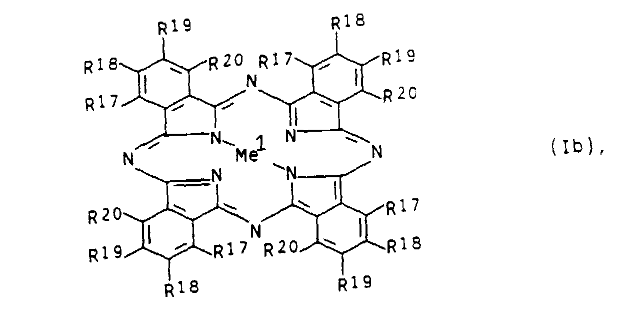 in der
R¹⁷ und R¹⁸ oder R¹⁸ und R¹⁹ oder R¹⁹ und R²⁰ zusammen jeweils einen Rest der Formel X²-C₂H₄-X³, worin einer der beiden Reste X² und X³ für Sauerstoff und der andere für Imino oder C₁-C₄-Alkylimino steht, und
R¹⁹ und R²⁰ oder R¹⁷ und R²⁰ oder R¹⁷ und R¹⁸ unabhängig voneinander jeweils Wasserstoff oder Halogen bedeuten und
Me die obengenannte Bedeutung besitzt,
der Naphthalocyanine der Formel II 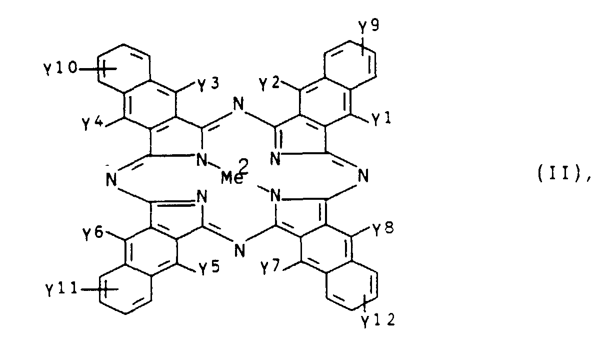 in der
Y¹, Y², Y³, Y⁴, Y⁵, Y⁶, Y⁷ und Y⁸ unabhängig voneinander jeweils Wasserstoff, Hydroxy oder C₁-C₂₀-Alkoxy, wobei die Alkylgruppen jeweils durch 1 bis 4 Sauerstoffatome in Etherfunktion unterbrochen sein können und gegebenenfalls durch Phenyl substituiert sind,
Y⁹, Y¹⁰, Y¹¹ und Y¹² unabhängig voneinander jeweils Wasserstoff oder C₁-C₂₀-Alkoxy, wobei die Alkylgruppen jeweils durch 1 bis 4 Sauerstoffatome in Etherfunktion unterbrochen sein könne, Halogen, hydroxylsulfonyl oder C₁-C₄-Dialkylsulfamoyl und
Me zweimal Wasserstoff, zweimal Lithium, Magnesium, Zink, Kupfer, Nickel oder AlCl bedeuten, mit der Maßgabe, daß mindestens einer der Reste Y¹ bis Y⁸ von Wasserstoff verschieden ist,
der Nickel-Dithiolen-Komplexe der Formel III 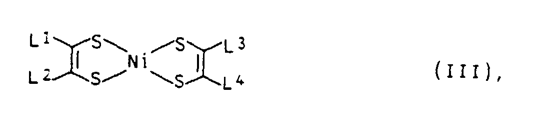 in der
L¹, L², L³ und L⁴ unabhängig voneinander jeweils C₁-C₂₀-Alkyl, das gegebenenfalls durch 1 bis 4 Sauerstoffatome in Etherfunktion unterbrochen ist, Phenyl, C₁-C₂₀-Alkylphenyl, C₁-C₂₀-Alkoxyphenyl, wobei die Alkylgruppen jeweils durch 1 bis 4 Sauerstoffatome in Etherfunktion unterbrochen sein können, oder L¹ und L² und/oder L³ und L⁴ jeweils zusammen den Rest der Formel 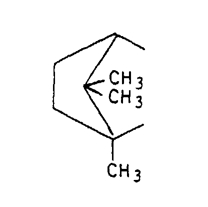 bedeuten,
der Aminiumverbindungen der Formel IV 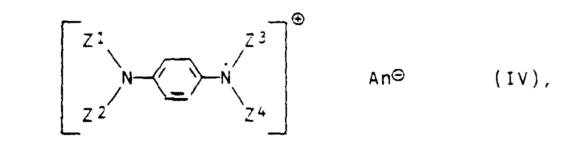 in der
Z¹, Z², Z³ und z⁴ unabhängig voneinander jeweils C₁-C₂₀-Alkyl, das gegebenenfalls durch 1 bis 4 Sauerstoffatome in Etherfunktion unterbrochen ist, C₁-C₂₀-Alkanoyl oder einen Rest der Formel 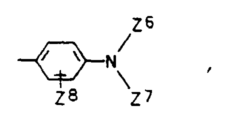
worin Z⁶ für Wasserstoff, C₁-C₂₀-Alkyl, das gegebenenfalls durch 1 bis 4 Sauerstoffatome in Etherfunktion unterbrochen ist, oder C₁-C₂₀-Alkanoyl, Z⁷ für Wasserstoff oder C₁-C₂₀-Alkyl, das gegebenenfalls durch 1 bis 4 Sauerstoffatome in Etherfunktion unterbrochen ist, und Z⁸ für Wasserstoff, C₁-C₂₀-Alkyl, das gegebenenfalls durch 1 bis 4 Sauerstoffatome in Etherfunktion unterbrochen ist, oder Halogen stehen, und
An^{⊖} das Äquivalent eines Anions bedeuten,
der Methinfarbstoffe der Formel V 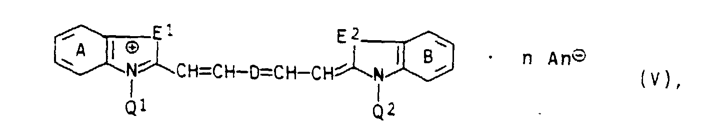 in der die Ringe A und B unabhängig voneinander jeweils gegebenenfalls benzoanelliert sind und substituiert sein können,
E¹ und E² unabhängig voneinander jeweils Sauerstoff, Schwefel, Imino oder einen Rest der Formel
-C(CH₃)₂- oder -CH=CH- ,
D einen Rest der Formel
-CE³= , -CH=CE³-CH= , 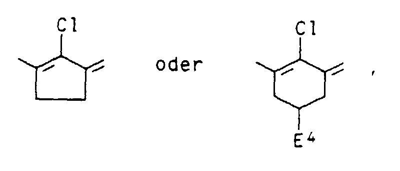
worin E³ für Wasserstoff, C₁-C₆-Alkyl, Chlor oder Brom und E⁴ für Wasserstoff oder C₁-C₆-Alkyl stehen,
Q¹ und Q² unabhängig voneinander jeweils Phenyl, C₅-C₇-Cycloalkyl, C₁-C₁₂-Alkyl das durch 1 bis 3 Sauerstoffatome in Etherfunktion unterbrochen sein kann und gegebenenfalls durch Hydroxy, Chlor, Brom, Carboxyl, C₁-C₄-Alkoxycarbonyl, Acryloyloxy, Methacryloyloxy, Hydroxysulfonyl, C₁-C₇-Alkanoylamino, C₁-C₆-Alkylcarbamoyl, C₁-C₆-Alkylcarbamoyloxy oder einen Rest der Formel G^{⊕}(K)₃, worin G für Stickstoff oder Phosphor und K für Phenyl, C₅-C₇-Cycloalkyl oder C₁-C₁₂-Alkyl stehen, substituiert ist,
An^{⊖} das Äquivalent eines Anions und
n 1, 2 oder 3 bedeuten, oder
der Azulenquadratsäurefarbstoffe der Formel VI 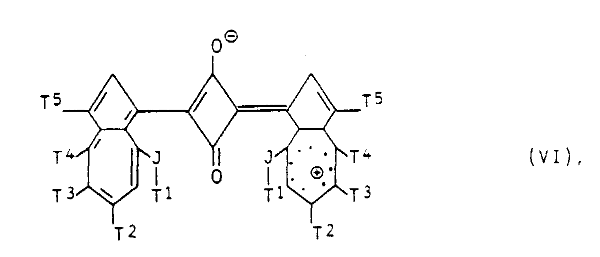 in der
J C₁-C₁₂-Alkylen,
T¹ Wasserstoff, Halogen, Amino, Hydroxy, C₁-C₁₂-Alkoxy, Phenyl, substituiertes Phenyl, Carboxyl, C₁-C₁₂-Alkoxycarbonyl, Cyano oder einen Rest der Formel -NT⁷-CO-T⁶, -CO-NT⁶T⁷ oder O-CO-NT⁶T⁷, worin T⁶ und T⁷ unabhängig voneinander jeweils für Wasserstoff, C₁-C₁₂-Alkyl, C₅-C₇-cycloalkyl, Phenyl, 2,2,6,6-Tetramethylpiperidin-4-yl oder Cyclohexylaminocarbonyl stehen, und
T², T³, T⁴ und T⁵ unabhängig voneinander jeweils Wasserstoff oder C₁-C₁₂-Alkyl, das gegebenenfalls durch Halogen, Amino, C₁-C₁₂-Alkoxy, Phenyl, substituiertes Phenyl, Carboxyl, C₁-C₁₂-Alkoxycarbonyl oder Cyanc substituiert ist, bedeuten,
mit der Maßgabe, daß wenn T⁵ Wasserstoff bedeutet, an einem oder beiden Azulenringen die Ringpositionen der Substituenten J-T¹ und T⁴ innerhalb eines Azulenrings auch gegeneinander vertauscht sein können,
die ihr Absorptionsmaximum im Bereich von 700 bis 1200 nm aufweisen, Lösungsmittel und Bindemittel, als Druckfarbe.

2. Verwendung einer Flüssigkeit nach Anspruch 1, enthaltend einen oder mehrere Farbstoffe aus der Klasse der Naphthalocyanine der Formel II oder der Nickel-Dithiolen-Komplexe der Formel III.

3. Verwendung einer Flüssigkeit nach Anspruch 1, enthaltend ein oder mehrere Naphthalocyanine der Formel IIa 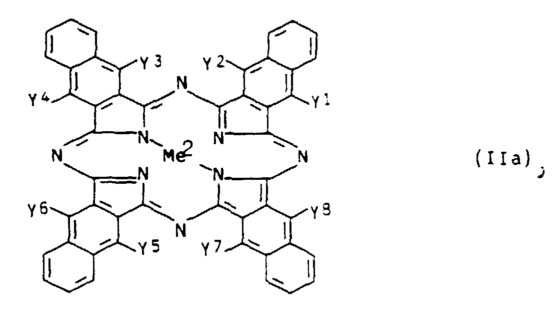 in der
Y¹, Y², Y³, Y⁴, Y⁵, Y⁶, Y⁷ und Y⁸ unabhängig voneinander jeweils Wasserstoff, Hydroxy oder C₁-C₂₀-Alkoxy und
Me zweimal Wasserstoff, zweimal Lithium, Magnesium, Zink, Kupfer, Nickel oder AlCl bedeuten.

4. Verwendung einer Flüssigkeit nach Anspruch 1, enthaltend 0,001 bis 15 Gew.-%, bezogen auf das Gewicht der Flüssigkeit, an Farbstoff.

5. Verwendung einer Flüssigkeit nach Anspruch 1 als Druckfarbe für den Tiefdruck, Hochdruck oder Flexodruck.

## Claims

1. The use of a liquid comprising one or more dyes with an absorption maximum within the range from 700 to 1200 nm from the class of the phthalocyanines of the formula Ia 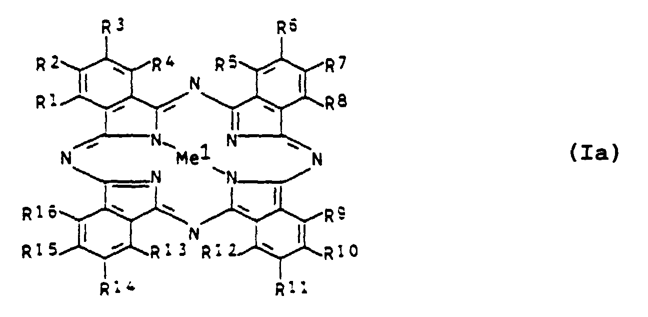 where
Me is two times hydrogen, two times lithium, magnesium, zinc, copper, nickel, VO, TiO or AlCl,
at least 4 of the radicals R¹ to R¹⁶ are each independently of the others a radical of the formula W-X¹, where W is a chemical bond, sulfur, imino, C₁-C₄-alkylimino or phenylimino and X¹ is C₁-C₂₀-alkyl, which may be interrupted by from 1 to 4 oxygen atoms in ether function and may be phenyl-substituted, or is substituted or unsubstituted phenyl, and
any remaining radicals R¹ to R¹⁶ are each hydrogen, halogen, hydroxysulfonyl or C₁-C₄-dialkylsulfamoyl, the phthalocyanines of the formula Ib 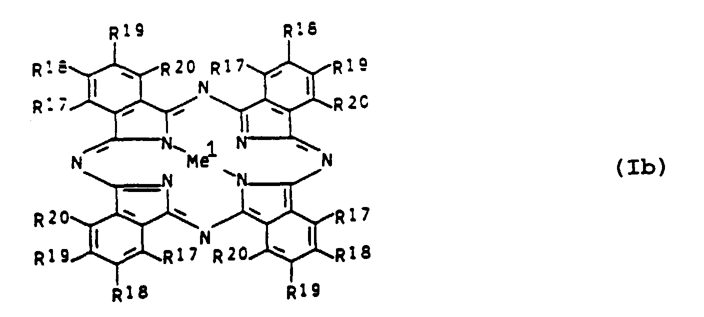 where
R¹⁷ and R¹⁸ or R¹⁸ and R¹⁹ or R¹⁹ and R²⁰ together are in each case a radical of the formula X²-C₂H₄-X³, wherein one of the two radicals X² and X³ is oxygen and the other is imino or C₁-C₄-alkylimino,
R¹⁹ and R²⁰ or R¹⁷ and R²⁰ or R¹⁷ and R¹⁸ are each independently of the other hydrogen or halogen, and
Me is as defined above,
the naphthalocyanines of the formula II 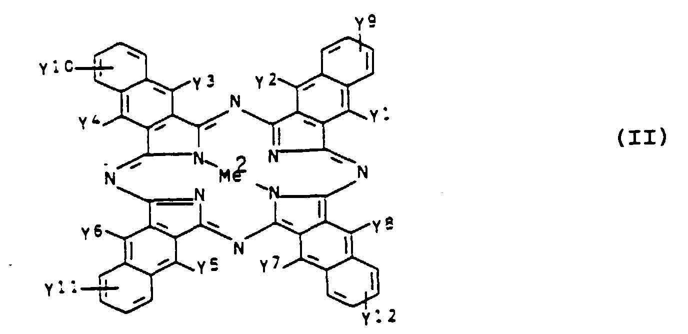 where
Y¹, Y², Y³, Y⁴, Y⁵, Y⁶, Y⁷ and Y⁸ are each independently of the others hydrogen, hydroxyl or C₁-C₂₀-alkoxy, wherein the alkyl groups may each be interrupted by from 1 to 4 oxygen atoms in ether function and may be phenyl-substituted,
Y⁹, Y¹⁰, Y¹¹ and Y¹² are each independently of the others hydrogen or C₁-C₂₀-alkoxy, wherein the alkyl groups may each be interrupted by from 1 to 4 oxygen atoms in ether function, halogen, hydroxysulfonyl or C₁-C₄-dialkylsulfamoyl, and
Me is two times hydrogen, two times lithium, magnesium, zinc, copper, nickel or AlCl with the proviso that at least one of the radicals Y¹ to Y⁸ is not hydrogen,
the nickel-dithiolene complexes of the formula III 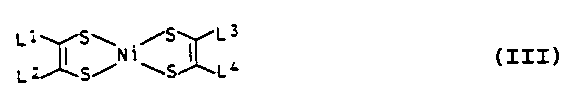 where
L¹, L², L³ and L⁴ are each independently of the others C₁-C₂₀-alkyl, which may be interrupted by from 1 to 4 oxygen atoms in ether function, phenyl, C₁-C₂₀-alkylphenyl, C₁-C₂₀-alkoxyphenyl, wherein the alkyl groups may each be interrupted by from 1 to 4 oxygen atoms in ether function, or L¹ and L² and/or L³ and L⁴ are in each case together the radical of the formula 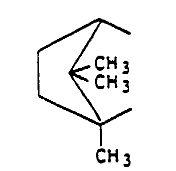 the aminium compounds of the formula IV 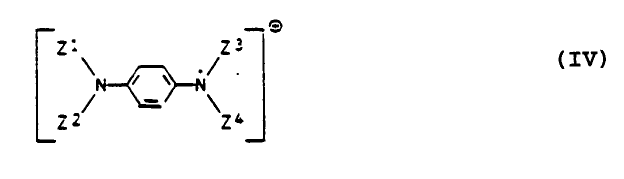 where
Z¹, Z², Z³ and Z⁴ are each independently of the others C₁-C₂₀-alkyl, which may be interrupted by from 1 to 4 oxygen atoms in ether function, C₁-C₂₀-alkanoyl or a radical of the formula 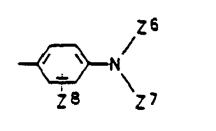
where Z⁶ is hydrogen, C₁-C₂₀-alkyl, which may be interrupted by from 1 to 4 oxygen atoms in ether function, or C₁-C₂₀-alkanoyl, Z⁷ is hydrogen or C₁-C₂₀-alkyl, which may be interrupted by from 1 to 4 oxygen atoms in ether function, and Z⁸ is hydrogen, C₁-C₂₀-alkyl, which may be interrupted by from 1 to 4 oxygen atoms in ether function, or halogen, and
An^{⊖} is the equivalent of an anion,
the methine dyes of the formula V 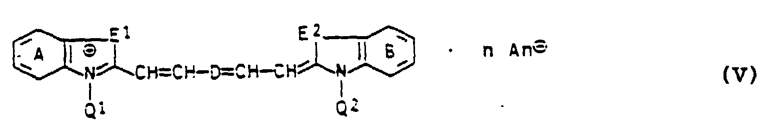 where the rings A and B independently each be benzofused and substituted,
E¹ and E² are each independently of the other oxygen, sulfur, imino or a radical of the formula
-C(CH₃)₂- or -CH=CH-,
D is a radical of the formula
-CE³= or -CH=CE³-CH= , 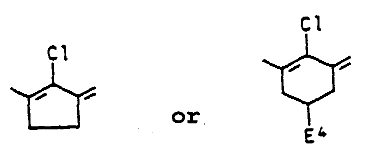
where E³ is hydrogen, C₁-C₆-alkyl, chlorine or bromine and E⁴ is hydrogen or C₁-C₆-alkyl,
Q¹ and Q² are each independently of the other phenyl, C₅-C₇-cycloalkyl, C₁-C₁₂-alkyl, which may be interrupted by from 1 to 3 oxygen atoms in ether function and may be substituted by hydroxyl, chlorine, bromine, carboxyl, C₁-C₄-alkoxycarbonyl, acryloyloxy, methacryloyloxy, hydroxysulfonyl, C₁-C₇-alkanoylamino, C₁-C₆-alkylcarbamoyl, C₁-C₆-alkylcarbamoyloxy or a radical of the formula G^{⊕}(K)₃, where G is nitrogen or phosphorus and K is phenyl, C₅-C₇-cycloalkyl or C₁-C₁₂-alkyl,
An^{⊖} is the equivalent of an anion, and
n is 1, 2 or 3. or
the azulenesquaric acid dyes of the formula VI 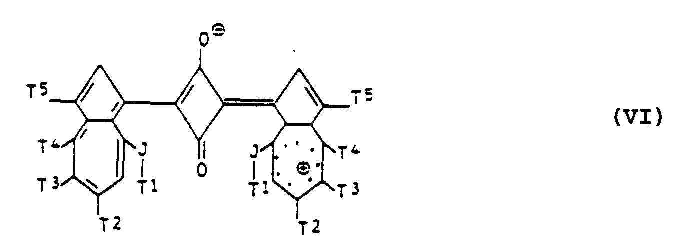 where
J is C₁-C₁₂-alkylene,
T¹ is hydrogen, halogen, amino, hydroxyl, C₁-C₁₂-alkoxy, phenyl, substituted phenyl, carboxyl, C₁-C₁₂-alkoxycarbonyl, cyano or a radical of the formula -NT⁷-CO-T⁶, -CO-NT⁶T⁷ or O-CO-NT⁶T⁷, where T⁶ and T⁷ are each independently of the other hydrogen, C₁-C₁₂-alkyl, C₅-C₇-cycloalkyl, phenyl, 2,2,6,6-tetramethylpiperidin-4-yl or cyclohexylaminocarbonyl, and
T², T³, T⁴ and T⁵ are each independently of the others hydrogen or C₁-C₁₂-alkyl, which may be substituted by halogen, amino, C₁-C₁₂-alkoxy, phenyl, substituted phenyl, carboxyl, C₁-C₁₂-alkoxycarbonyl or cyano,
with the proviso that the ring positions of the substituents J-T¹ and T⁴ within an azulene ring may also be interchanged in either or both of the azulene rings when T⁵ is hydrogen,
solvents and binders, as printing ink.

2. The use of a liquid as claimed in claim 1, comprising one or more dyes of the class of the naphthalocyanines of the formula II or the nickel-dithiolene complexes of the formula III.

3. The use of a liquid as claimed in claim 1, comprising one or more naphthalocyanines of the formula IIa 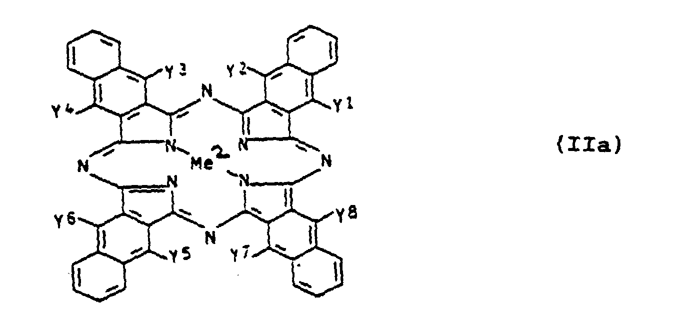 where
Y¹, Y², Y³, Y⁴, Y⁵, Y⁶, Y⁷ and Y⁸ are each independently of the others hydrogen, hydroxyl or C₁-C₂₀-alkoxy, and
Me is two times hydrogen, two times lithium, magnesium, zinc, copper, nickel or AlCl.

4. The use of a liquid as claimed in claim 1, comprising from 0.001 to 15% by weight, based on the weight of the liquid, of dye.

5. The use of a liquid as claimed in claim 1 as intaglio, letter press or flexographic printing ink.

## Revendications

1. Utilisation, comme encre d'imprimerie, d'un liquide qui contient un ou plusieurs colorants - de la classe des phtalocyanines de formule Ia 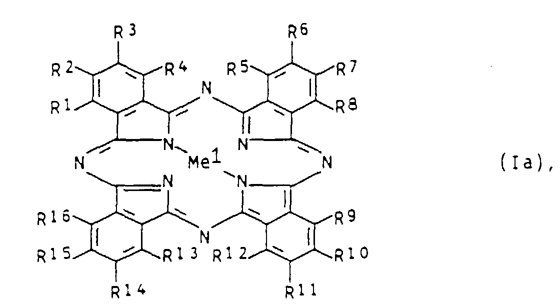 dans laquelle
Me représente de l'hydrogène deux fois, du lithium deux fois, du magnésium, du zinc, du cuivre, du nickel, VO, TiO ou AlCl,
au moins 4 des restes R¹ à R¹⁶ représentent chacun, indépendamment les uns des autres, un reste de formule W-X¹, W étant mis pour une liaison chimique, un atome de soufre, un groupement imino, alkylimino en C₁-C₄ ou phénylimino et X¹ pour un reste alkyle en C₁-C₂₀ qui est éventuellement interrompu par 1 à 4 atomes d'oxygène en function éther et peut être substitué par un reste phényle, ou pour un reste phényle éventuellement substitué, et
les autres restes R¹ à R¹⁶ éventuellement présents représentent des atomes d'hydrogène, d'halogène, des groupements hydroxysulfonyle ou dialkylsulfamoyle en C₁-C₄,
- de la classe des phtalocyanines de formule Ib, 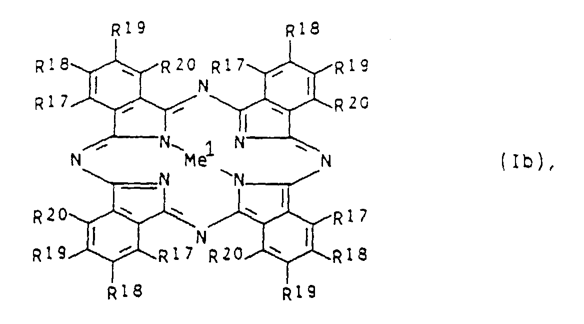 dans laquelle
R¹⁷ et R¹⁸ ou R¹⁸ et R¹⁹ ou R¹⁹ et R²⁰ représentent ensemble chaque fois un reste de formule X²-C₂H₄-X³, dans laquelle l'un des deux restes X² et X³ est mis pour un atome d'oxygène et l'autre pour un groupement imino ou alkylimino en C₁-C₄, et
R¹⁹ et R²⁰ ou R¹⁷ et R²⁰ ou R¹⁷ et R¹⁸ représentent chacun, indépendamment l'un de l'autre, un atome d'hydrogène ou d'halogène et
Me a la signification donnée ci-dessus,
- de la ciasse des naphtalocyanines de formule II 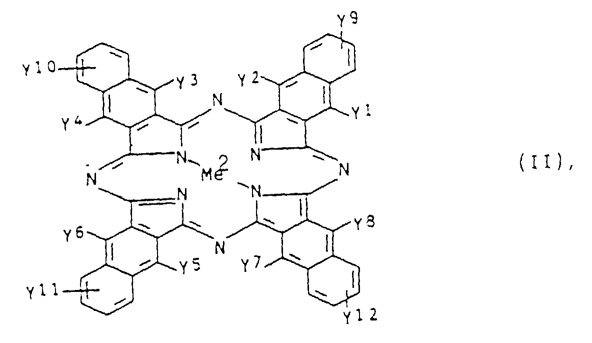 dans laquelle
Y¹, Y², Y³, Y⁴, Y⁵, Y⁶, Y⁷ et Y⁸ représentent chacun, indépendamment les uns des autres, un atome d'hydrogène ou un reste hydroxy ou alcoxy en C₁-C₂₀, les groupements alkyle pouvant être interrompus chacun par 1 à 4 atomes d'oxygène en fonction éther et étant éventuellement substitués par des restes phényle,
Y⁹, Y¹⁰, Y¹¹ et Y¹² représentent chacun, indépendamment les uns des autres, un atome d'hydrogène ou un groupement alcoxy en C₁-C₂₀, les groupements alkyle pouvant être interrompus chacun par 1 à 4 atomes d'oxygène en fonction éther, un atome d'halogène ou un groupement hydroxysulfonyle ou dialkylsulfamoyle en C₁-C₄, et
Me représente de l'hydrogène deux fois, du lithium deux fois, du magnésium, du zinc, du cuivre, du nickel ou AlCl, étant spécifié que l'un au moins des restes Y¹ à Y⁸ est différent d'un atome d'hydrogène,
- de la classe des complexes nickel-dithiolène de formule III 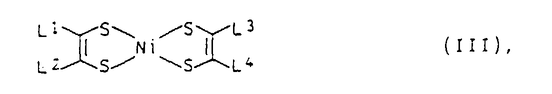 dans laquelle
L¹, L², L³ et L⁴ représentent chacun, indépendamment les uns des autres, un reste alkyle en C₁-C₂₀ qui est éventuellement interrompu par 1 à 4 atomes d'oxygène en fonction éther, un reste phényle, alkylphényle en C₁-C₂₀, alcoxyphényle en C₁-C₂₀, les groupements alkyle pouvant être interrompus chacun par 1 à 4 atomes d'oxygène en fonction éther, ou L¹ et L² et/ou L³ et L⁴ représentent ensemble chaque fois le reste de formule 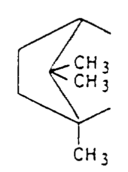
- de la classe des composés aminium de formule IV 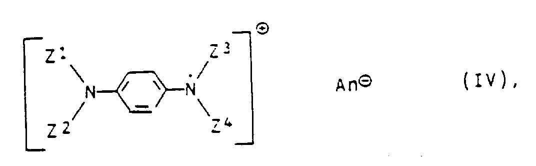 dans laquelle
Z¹, Z², Z³ et Z⁴ représentent chacun, indépendamment les uns des autres, un reste alkyle en C₁-C₂₀ qui est interrompu éventuellement par 1 à 4 atomes d'oxygène en fonction éther, un reste alcanoyle en C₁-C₂₀ ou un reste de formule 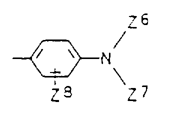
où Z⁶ est mis pour un atome d'hydrogène, un reste alkyle en C₁-C₂₀ qui est éventuellement interrompu par 1 à 4 atomes d'oxygène en fonction éther ou un reste alcanoyle en C₁-C₂₀, Z⁷ est mis pour un atome d'hydrogène ou un reste alkyle en C₁-C₂₀ qui est éventuellement interrompu par 1 à 4 atomes d'oxygène en fonction éther, et Z⁸ est mis pour un atome d'hydrogène, un reste alkyle en C₁-C₂₀ qui est éventuellement interrompu par 1 à 4 atomes d'oxygène en fonction éther ou un atome d'halogène, et
An^{⊖} est l'équivalent d'un anion,
- de la ciasse ces colorants méthiniques de formule V 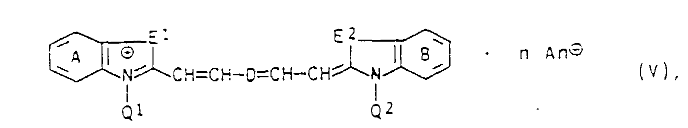 dans laquelle les noyaux A et B, indépendamment l'un de l'autre, sont éventuellement benzocondensés et peuvent être substitués,
E¹ et E² représentent chacun, indépendamment l'un de l'autre, un atome d'oxygène, de soufre, un groupement imino ou un reste de formule
-(CH₃)₂- ou -CH=CH-,
D représente un reste de formule
-CE³=, -CH=CE³-CH= , 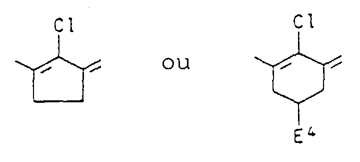
où E³ est mis pour un atome d'hydrogène, un reste alkyle en C₁-C₆ ou un atome de chlore ou de brome et E⁴ est mis pour un atome d'hydrogène ou un reste alkyle en C₁-C₆,
Q¹ et Q² représentent chacun, indépendamment l'un de l'autre, un reste phényle, cycloalkyle en C₅-C₇, alkyle en C₁-C₁₂ qui peut être interrompu par 1 à 3 atomes d'oxygène en fonction éther et est éventuellement substitué par un groupement hydroxy, un atome de chlore, ce brome, un groupement carboxyle, (alcoxy en C₁-C₄)carbonyle, acryloyloxy, méthacryloyloxy, hydroxysulfonyle, alcanoylamino en C₁-C₇, alkylcarbamoyle en C₁-C₆, alkylcarbamoyloxy en C₁-C₆ ou un reste de formule G⁺(K)₃, où G est mis pour un atome d'azote ou de phosphore et K pour un reste phényle, cycloalkyle en C₅-C₇ ou alkyle en C₁-C₁₂,
An- est l'équivalent d'un anion et
n est mis pour 1, 2 ou 3, ou
- de la classe des colorants de type acide azulènequadratique de formule VI 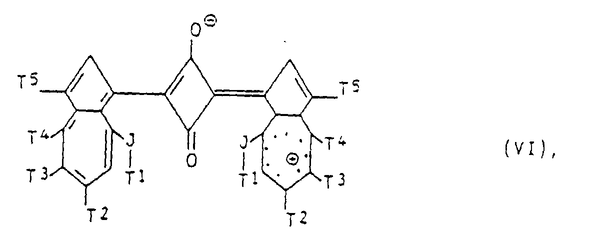 dans laquelle
J représente un reste alkylène en C₁-C₁₂,
T¹ représente un atome d'hydrogène, d'halogène, un groupement amino, hydroxy, alcoxy en C₁-C₁₂, phényle, phényle substitué, carboxyle, (alcoxy en C₁-C₁₂)carbonyle, cyano ou un reste de formule -NT⁷-CO-T⁶, -CO-NT⁶T⁷ ou O-CO-NT⁶T⁷, où T⁶ et T⁷ sont mis chacun, indépendamment l'un de l'autre, pour un atome d'hydrogène, un reste alkyle en C₁-C₁₂, cycloalkyle en C₈-C₇, phényle, 2,2,5,5-tétraméthylpipéridin-4-yle ou cyclohexylaminocarbonyle, et
T², T³, T⁴ et T⁵ représentent chacun, indépendamment les uns des autres, un atome d'hydrogène ou un reste alkyle en C₁-C₁₂ qui est éventuellement substitué par un atome d'halogène ou un groupement amino, alcoxy en C₁-C₁₂, phényle, phényle substitué, carboxyle, (alcoxy en C₁-C₁₂)carbonyle ou cyano,
étant spécifié que quand T⁵ représente un atome d'hydrogène, sur l'un ou sur l'un et l'autre des noyaux azuléniques, les positions cycliques des substituants J-T¹ et T⁴ à l'intérieur d'un noyau azulénique peuvent aussi être interchangées,
qui présentent leur maximum d'absorption dans l'intervalle de 700 à 1200 nm,
un solvant et un liant.

2. Utilisation d'un liquide selon la revendication 1, contenant un ou plusieurs colorants de la classe des naphtalocyanines de formule II ou des complexes nickel-dithiolène de formule III.

3. Utilisation d'un liquide selon la revendication 1, contenant une ou plusieurs naphtalocyanines de formule IIa 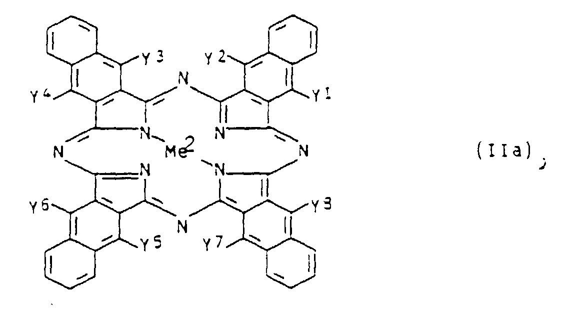 dans laquelle
Y¹, Y², Y³, Y⁴, Y⁵, Y⁶, Y⁷ et Y⁸ représentent chacun, indépendamment les uns des autres, un atome d'hydrogène ou un reste hydroxy ou alcoxy en C₁-C₂₀ et
Me représente de l'hydrogène deux fois, du lithium deux fois, du magnésium, du zinc, du cuivre, du nickel ou AlCl.

4. Utilisation d'un liquide selon la revendication 1, contenant 0,001 à 15% en poids de colorant par rapport au poids du liquide.

5. Utilisation d'un liquide selon la revendication 1 comme encre d'imprimerie pour l'impression en héliogravure, l'impression en relief ou l'impression flexographique.
